# EUROPÄISCHE PATENTSCHRIFT

(11) **EP 1 772 643 B1**
(45) Veröffentlichungstag und Bekanntmachung des Hinweises auf die Patenterteilung: **07.09.2011**
(21) Anmeldenummer: 06019327.3
(22) Anmeldetag: 15.09.2006
(51) Int. Cl.: F16D 13/58

(54) **Kupplungsaggregat**
Clutch assembly
Ensemble embrayage

(30) Priorität: 08.10.2005 DE 102005048318
(43) Veröffentlichungstag der Anmeldung: 11.04.2007
(73) Patentinhaber: Schaeffler Technologies GmbH & Co. KG, 91074 Herzogenaurach (DE)
(72) Erfinder: Mán, Lászlo, Dr., 77833 Ottersweier-Unzhurst (DE)

(56) Entgegenhaltungen:
- FR-A- 2 812 917
- FR-A1- 2 813 932
- US-A- 5 715 921

## Beschreibung

Die Erfindung betrifft ein Kupplungsaggregat zur Drehmomentübertragung zwischen einer Antriebseinheit und einem Getriebe, mit mindestens einer Reibungskupplung, die eine Druckplatte umfasst, die drehfest, aber axial begrenzt verlagerbar in einem Gehäuse angeordnet ist, wobei zwischen dem Gehäuse, insbesondere einem Kupplungsdeckel, und der Druckplatte eine Tellerfeder wirksam ist, die mehrere sich im Wesentlichen radial nach innen erstreckende Tellerfederzungen aufweist, durch welche die Druckplatte in Richtung einer zwischen der Druckplatte und einer Gegendruckplatte einklemmbaren Kupplungsscheibe mit Reibbelägen beaufschlagbar ist.

FR 2812917 zeigt ein solches Kupplungsaggregat.

Aufgabe der Erfindung ist es, ein Kupplungsaggregat gemäß dem Oberbegriff des Anspruchs 1 zu schaffen, das einfach aufgebaut und kostengünstig herstellbar ist.

Die Aufgabe ist bei einem Kupplungsaggregat zur Drehmomentübertragung zwischen einer Antriebseinheit und einem Getriebe, mit mindestens einer Reibungskupplung, die eine Druckplatte umfasst, die drehfest, aber axial begrenzt verlagerbar in einem Gehäuse angeordnet ist, wobei zwischen dem Gehäuse, insbesondere einem Kupplungsdeckel, und der Druckplatte eine Tellerfeder wirksam ist, die mehrere sich im Wesentlichen radial nach innen erstreckende Tellerfederzungen aufweist, durch welche die Druckplatte in Richtung einer zwischen der Druckplatte und einer Gegendruckplatte einklemmbaren Kupplungsscheibe mit Reibbelägen beaufschlagbar ist, dadurch gelöst, dass mehrere Tellerfederzungen abgewinkelte Enden aufweisen, die so an dem Gehäuse, insbesondere an dem Kupplungsdeckel, abgestützt sind, dass die Tellerfeder vorgespannt wird. Durch die Vorspannung der Tellerfeder wird erreicht, dass die Tellerfeder im geöffneten Zustand der Reibungskupplung keine Anpresskraft auf die Druckplatte ausübt. Die sich radial nach innen erstreckenden Tellerfederzungen bilden Betätigungshebel. Die Betätigungshebel werden über ein Einrücklager betätigt, das an den Enden der Betätigungshebel angreift. Die Vorspannung der Tellerfeder sorgt auch für die nötige Lageranpressung.

Ein bevorzugtes Ausführungsbeispiel des Kupplungsaggregats ist dadurch gekennzeichnet, dass sich die abgewinkelten Enden der Tellerfederzungen im Wesentlichen in axialer Richtung erstrecken. Durch die am Gehäuse, insbesondere an dem Kupplungsdeckel, vorgesehenen Abstützstellen werden die abgewinkelten Enden der Tellerfederzungen radial nach innen gedrückt, um die Tellerfeder vorzuspannen.

Ein weiteres bevorzugtes Ausführungsbeispiel des Kupplungsaggregats ist dadurch gekennzeichnet, dass die abgewinkelten Enden der Tellerfederzungen jeweils an einer Rolle abgestützt sind, die drehbar an dem Gehäuse, insbesondere an dem Kupplungsdeckel, gelagert ist. Dadurch wird ermöglicht, dass die abgewinkelten Enden der Tellerfederzungen reibungsarm an den Rollen abrollen, wenn die Reibungskupplung betätigt wird.

Ein weiteres bevorzugtes Ausführungsbeispiel des Kupplungsaggregats ist dadurch gekennzeichnet, dass die Rolle eine Lagerhülse umfasst, die auf einem Lagerbolzen drehbar gelagert ist. Die Enden des Lagerbolzens sind in entsprechenden Ausnehmungen des Gehäuses, insbesondere des Kupplungsdeckels, aufgenommen.

Ein weiteres bevorzugtes Ausführungsbeispiel des Kupplungsaggregats ist dadurch gekennzeichnet, dass zwischen der Lagerhülse und dem Lagerbolzen Wälzkörper angeordnet sind. Die Wälzkörper haben zum Beispiel die Gestalt von geraden Kreiszylindern.

Ein weiteres bevorzugtes Ausführungsbeispiel des Kupplungsaggregats ist dadurch gekennzeichnet, dass die abgewinkelten Enden der Tellerfederzungen jeweils eine Rampe aufweisen, auf der die zugehörige Rolle bei einer Betätigung der Reibungskupplung abrollt. Durch die Rampengeometrie kann die Wirkung der abgewinkelten Enden der Tellerfederzungen beim Betätigen der Reibungskupplung gezielt beeinflusst werden.

Ein weiteres bevorzugtes Ausführungsbeispiel des Kupplungsaggregats ist dadurch gekennzeichnet, dass die Rampe eine Rampengeometrie aufweist, durch welche die Vorspannung der Tellerfeder bei einer Betätigung der Reibungskupplung kleiner wird. Dadurch wird beim Betätigen der Reibungskupplung ein allmählicher Aufbau der Anpresskraft der Druckplatte ermöglicht.

Ein weiteres bevorzugtes Ausführungsbeispiel des Kupplungsaggregats ist dadurch gekennzeichnet, dass in Umfangsrichtung zwischen zwei sich im Wesentlichen radial nach innen erstreckenden Tellerfederzungen jeweils eine abgewinkelte Tellerfederzunge angeordnet ist. Dadurch wird eine gleichmäßige Verteilung der Vorspannkraft über den Umfang der Tellerfeder ermöglicht.

Ein weiteres bevorzugtes Ausführungsbeispiel des Kupplungsaggregats ist dadurch gekennzeichnet, dass die Tellerfeder drei sich radial nach innen erstreckende Tellerfederzungen und drei abgewinkelte Tellerfederzungen aufweist. Diese Anzahl hat sich im Rahmen der vorliegenden Erfindung als besonders vorteilhaft erwiesen.

Ein weiteres bevorzugtes Ausführungsbeispiel des Kupplungsaggregats ist dadurch gekennzeichnet, dass zwischen der Tellerfeder und der Druckplatte eine Verschleißnachstelleinrichtungwirksam ist. Die Verschleißnachstelleinrichtung dient dazu, im Betrieb des Kupplungsaggregats zum Beispiel durch Reibung auftretenden Verschleiß auszugleichen.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein. Es zeigen:
Figur 1 ein erfindungsgemäßes Kupplungsaggregat in der Draufsicht;
Figur 2 das Kupplungsaggregat aus Figur 1 im Längsschnitt;
Figur 3 einen Halbschnitt des Kupplungsaggregats aus Figur 1 im geöffneten Zustand der Kupplung;
Figur 4 den gleichen Halbschnitt wie in Figur 3 im geschlossenen Zustand der Kupplung;
Figur 5 einen vergrößerten Ausschnitt aus Figur 4;
Figur 6 einen weiteren Halbschnitt des in Figur 1 dargestellten Kupplungsaggregats im geschlossenen Zustand der Kupplung;
Figur 7 einen vergrößerten Ausschnitt aus Figur 1 und
Figur 8 ein kartesisches Koordinatendiagramm, in dem die Ausrückkraft über dem Ausrückweg des in den Figuren 1 bis 7 dargestellten Kupplungsaggregats in Form von verschiedenen Kennlinien aufgetragen ist.

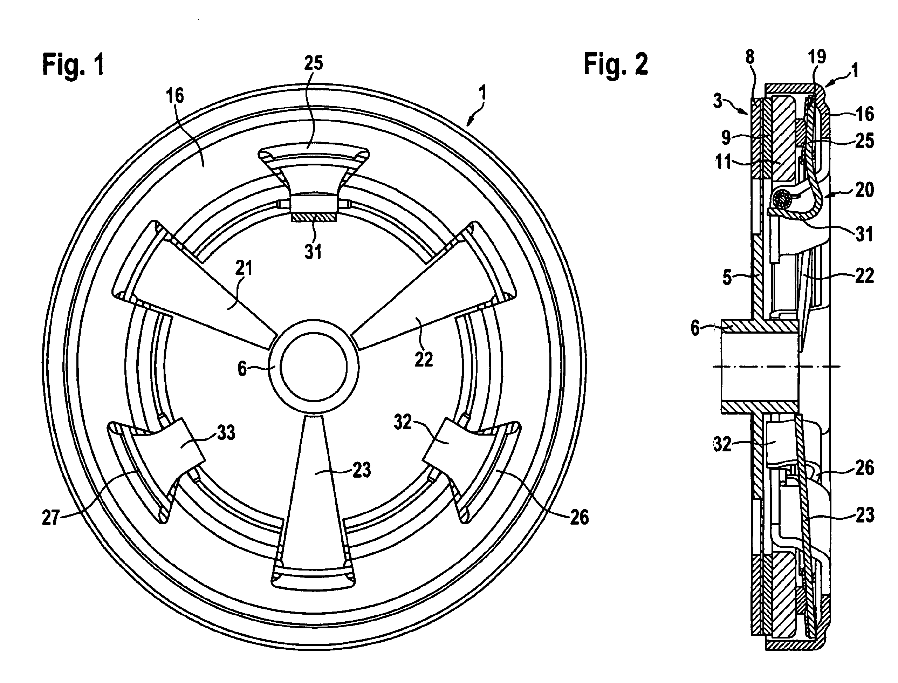

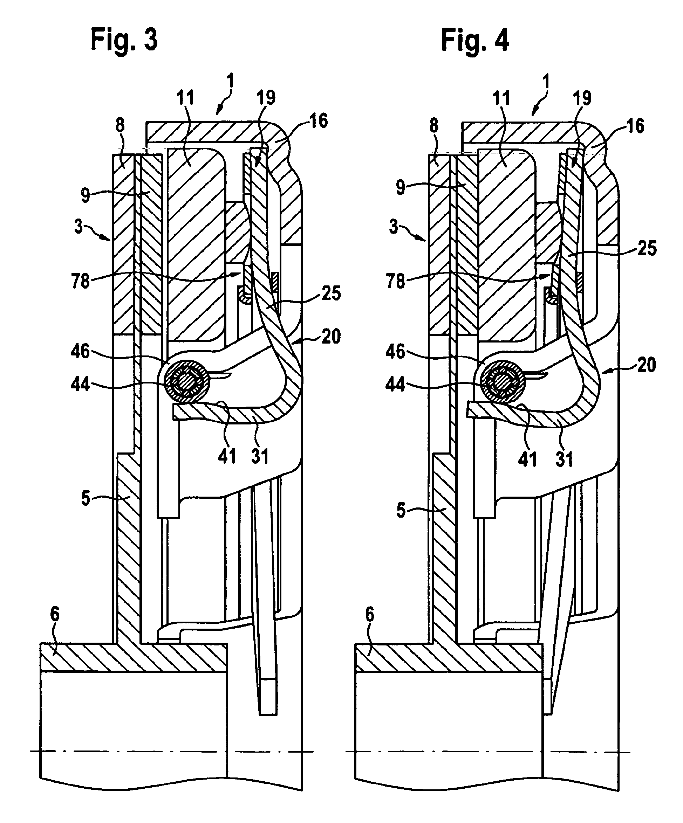

In den Figuren 1 und 2 ist ein Kupplungsaggregat 1 mit einer zugedrückten Kupplung 3 dargestellt. Bei der Kupplung 3 handelt es sich um eine Reibungskupplung. Das Kupplungsaggregat 1 kann zusätzlich zu der Kupplung 3 noch eine weitere Kupplung umfassen. Die Reibungskupplung 3 umfasst eine Kupplungsscheibe 5, die radial innen einstückig mit einer Kupplungsnabe 6 verbunden ist. Radial außen sind an der Kupplungsscheibe 5 Reibbeläge 8, 9 angebracht, die zur Drehmomentübertragung zwischen einer Druckplatte 11 und einer (nicht dargestellten) Gegendruckplatte eingeklemmt werden können. Die Gegendruckplatte ist zum Beispiel über Schraubverbindungen fest mit einem Kupplungsdeckel 16 verbunden, der auch als Kupplungsgehäuse bezeichnet wird. Der Kupplungsdeckel 16 ist drehfest mit einer (nicht dargestellten) Abtriebswelle einer Brennkraftmaschine verbunden. Die Kupplung 3 dient dazu, im geschlossenen Zustand, der in Figur 4 dargestellt ist, ein Drehmoment von der Brennkraftmaschine auf eine Getriebeeingangswelle zu übertragen. Im geschlossenen Zustand sind die Reibbeläge 8, 9 der Kupplungsscheibe 5 zwischen der Druckplatte 11 und der Gegendruckplatte eingeklemmt. Die Druckplatte 11 ist relativ zu der Gegendruckplatte axial bewegbar. Im geöffneten Zustand der Kupplung 3, der in Figur 3 dargestellt ist, ist die Druckplatte 11 in axialer Richtung von dem Reibbelag 9 der Kupplungsscheibe 5 beabstandet.

In den Figuren 1 und 2 befindet sich die Reibungskupplung 3 ebenfalls im geschlossenen, das heißt eingerückten Zustand. In axialer Richtung ist zwischen der Druckplatte 11 und dem Kupplungsdeckel 16 ein Grundkörper 19 einer Tellerfeder 20 angeordnet. Der Grundkörper 19 hat im Wesentlichen die Gestalt einer Kreisringscheibe, von der sich drei Tellerfederzungen 21 bis 23 radial nach innen erstrecken. Die Tellerfederzungen 21 bis 23 bilden Betätigungshebel, mit deren Hilfe die Druckplatte 11 aus ihrem in Figur 3 dargestellten geöffneten in ihren in den Figuren 1, 2 und 4 dargestellten geschlossenen Zustand verlagert wird. Die Betätigung der Reibungskupplung 3 erfolgt über ein Einrücklager, das an den freien Enden der Betätigungshebel 21 bis 23 angreift.

In Umfangsrichtung ist zwischen jeweils zwei Betätigungshebeln 21 bis 23 eine Tellerfederzunge 24 bis 26 angeordnet, die ebenfalls von dem Grundkörper 19 der Tellerfeder 20 ausgeht. Die Tellerfederzungen 25 bis 27 weisen jeweils ein in axialer Richtung abgewinkeltes Ende 31 bis 33 auf.

In den Figuren 3 und 4 sieht man, dass an dem abgewinkelten Ende 31 der Tellerfederzunge 25 eine Rampe 41 ausgebildet ist, an der eine Rolle 44 abrollt, die an mindestens einem Schenkel 46 drehbar gelagert ist, der von dem Kupplungsdeckel 16 ausgeht. Die Drehachse der Rolle 44 verläuft senkrecht zur Zeichenebene. Der Kupplungsdeckel 16 weist für die abgewinkelten Enden der Tellerfedern jeweils eine Aussparung auf, die von zwei Schenkeln begrenzt wird. In den Aussparungen sind die auf Bolzen drehbar gelagerten Laufrollen angebracht. Die Tellerfeder 20 ist in axialer Richtung in den Kupplungsdeckel 16 montiert. Die Rollen, von denen in den Figuren 3 und 4 nur die Rolle 44 zu sehen ist, drücken die abgewinkelten Enden, von denen in den Figuren 3 und 4 nur das abgewinkelte Ende 31 zu sehen ist, radial nach innen. Dadurch wird die Tellerfeder 20 vorgespannt. Die Tellerfeder 20 erzeugt so keine Anpresskraft an der Druckplatte 11. Die restlichen Tellerfederzungen, welche die Betätigungshebel bilden, kommen mit dem Einrücklager in Berührung und sorgen gleichzeitig auch für die nötige Lageranpressung.

In Figur 4 ist der eingerückte Zustand der Reibungskupplung 3 dargestellt, der auch als geschlossener Zustand bezeichnet wird. Der Einrückvorgang wird durch die sich radial nach innen erstreckenden Tellerfederzungen oder Betätigungshebel (21 bis 23 in Figur 1) bewirkt. Beim Einrücken der Kupplung 3 rollt die Rolle 44 auf der Rampe 41 ab. Die Rampengeometrie ist dabei so gewählt, dass die Vorspannung der Tellerfeder 20 durch das in axialer Richtung abgewinkelte Ende 31 immer kleiner wird. Das liefert den Vorteil, dass die Anpresskraft auf die Druckplatte 11 allmählich aufgebaut wird.

Bei der erfindungsgemäßen Anordnung ist vorteilhaft, dass die Kraftkompensation direkt in die Reibungskupplung 3 integriert ist. Dadurch können kleine Einrückkräfte, das heißt auch kleine Einrücklager und eine relativ einfache Aktorik verwendet werden. Die Hysterese der Pedalkraft ist durch das gesenkte Kraftniveau auch wesentlich kleiner. Die Rampen 41 befinden sich direkt auf den Tellerfederzungen 25 und bilden dadurch eine harte Lauffläche für die zugehörigen Rollen 44. Als zusätzliches Element für die Kompensation werden nur die Laufrollen verwendet. Die Kompensationskraft wird vollständig durch die Tellerfederzungen erzeugt. Für den Fall, dass die Abrollwege für die Rollen in Abhängigkeit vom zur Verfügung stehenden Bauraum zu kurz werden sollten, kann die Wirkrichtung der Rollenkraft so gewählt werden, dass sich die abgewinkelten Zungen beim Vorspannen auch in axialer Richtung verformen. Dadurch kann der Rollenweg beim Entspannen vergrößert werden.

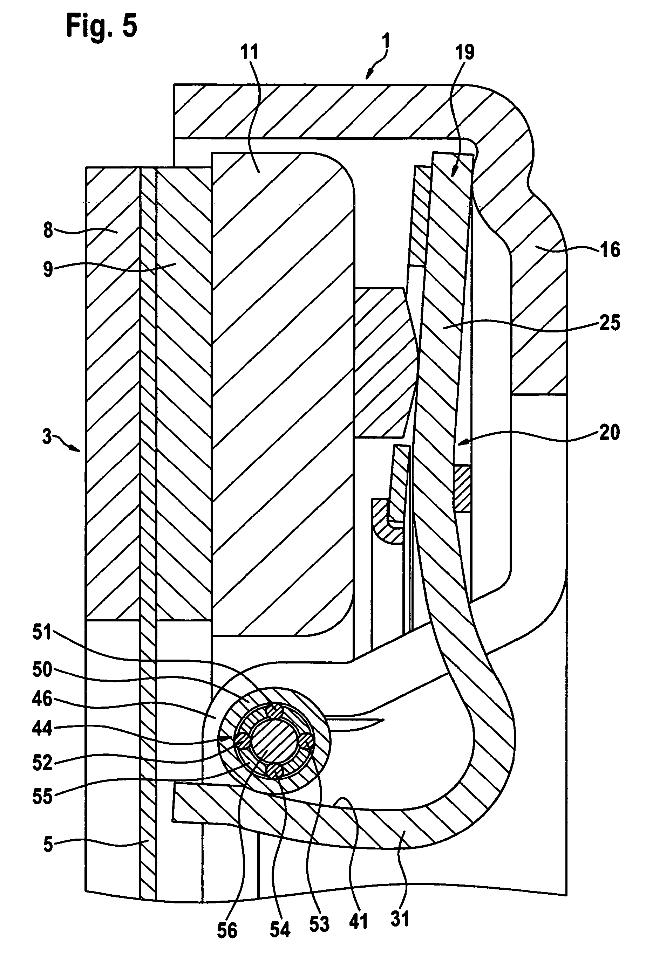

In Figur 5 ist der Ausschnitt mit der Rolle 44 aus Figur 4 vergrößert dargestellt. In der vergrößerten Darstellung sieht man, dass die Rolle 44 eine Lagerhülse 50 umfasst, die beim Betätigen der Kupplung 3 auf der Rampe 41 abrollt. Die Lagerhülse 50 ist mit Hilfe von vier Wälzkörpern 51 bis 54, die durch einen Käfig 55 in Position gehalten werden, auf einem Lagerbolzen 56 drehbar gelagert. Die Wälzkörper 51 bis 54 haben die Gestalt von Kreiszylindern. Der Lagerbolzen 56 weist zwei Enden auf, die in entsprechend ausgebildeten Aussparungen aufgenommen sind, die wiederum in dem Kupplungsdeckel 16 vorgesehen sind.

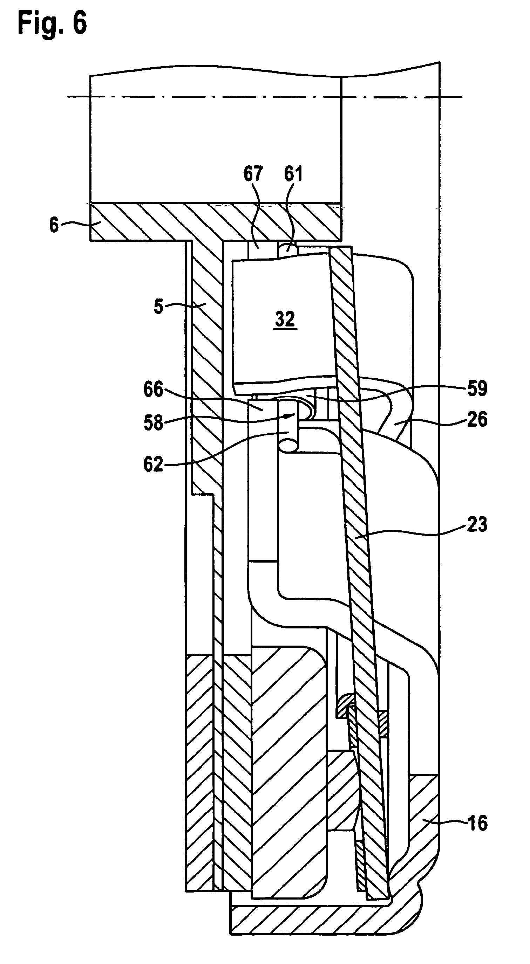

In Figur 6 ist die untere Hälfte des Längsschnitt aus Figur 2 vergrößert dargestellt. In der vergrößerten Darstellung sieht man, dass ein Bolzen 58, der zur Lagerung einer Lagerhülse 59 dient, zwei Enden 61 und 62 aufweist. Die Lagerhülse 59 liegt an dem abgewinkelten Ende 32 der Tellerfederzunge 26 an. Die beiden Enden 61, 62 des Lagerbolzens 58 sind in entsprechenden Aussparungen gehalten, die an zwei Schenkeln 66, 67 des Kupplungsdeckels 16 vorgesehen sind.

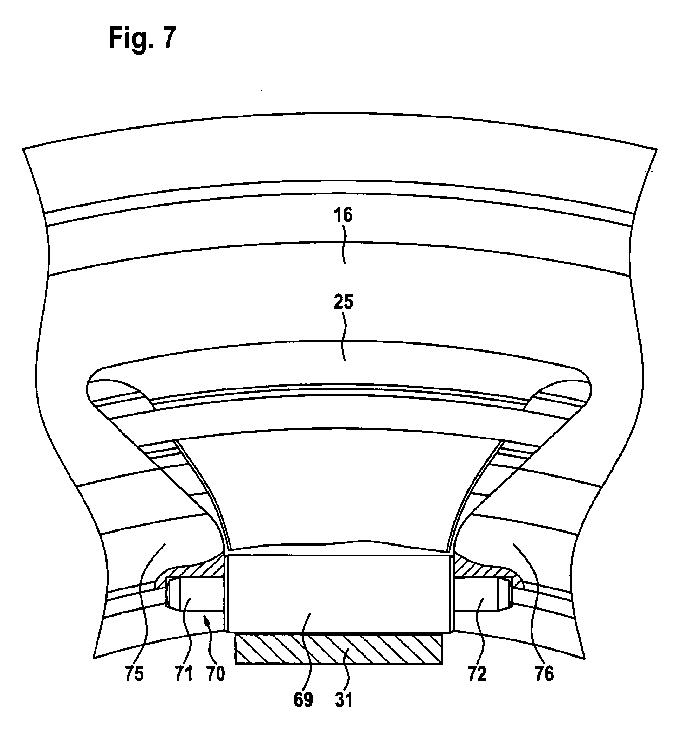

In Figur 7 ist ein Ausschnitt aus Figur 1 vergrößert dargestellt. In der vergrößerten Darstellung sieht man, dass das abgewinkelte Ende 31 der Tellerfederzunge 25 an einer Lagerhülse 69 anliegt, die auf einem Lagerbolzen 70 drehbar gelagert ist. Der Lagerbolzen 70 weist zwei Enden 71, 72 auf, die jeweils in einer entsprechenden Aussparung an einem Schenkel 75, 76 gehalten sind, der von dem Kupplungsdeckel 16 ausgeht.

In den Figuren 3 und 4 sieht man, dass in axialer Richtung zwischen dem Grundkörper 19 der Tellerfeder 20 und der Druckplatte 11, die auch als Anpressplatte bezeichnet wird, eine Verschleißnachstelleinrichtung 78 wirksam ist. Die Verschleißnachstelleinrichtung 78 dient dazu, im Betrieb der Reibungskupplung 3 zum Beispiel an den Reibbelägen 8, 9 auftretenden Verschleiß auszugleichen.

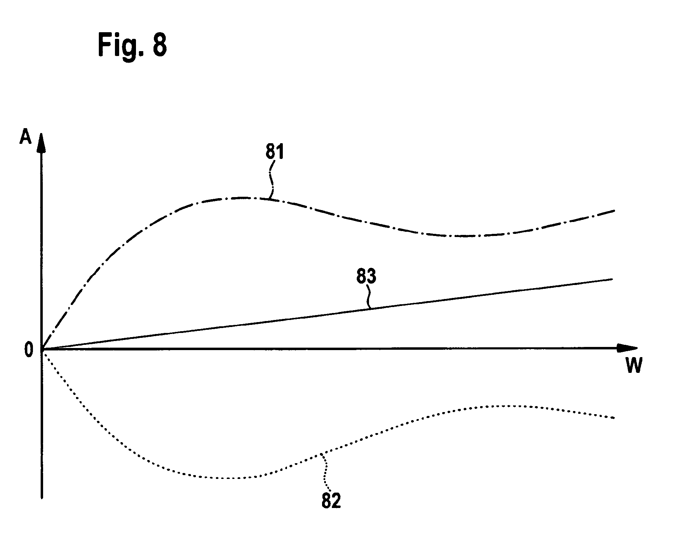

In Figur 8 ist in einem kartesischen Koordinatendiagramm die Ausrückkraft A der Reibungskupplung über dem Ausrückweg W in Form von verschiedenen Kennlinien 81 bis 83 aufgetragen. Bei der Kennlinie 81 handelt es sich um eine unkompensierte Linie. Bei der Kennlinie 82 handelt es sich um eine Kompensationskennlinie. Bei der Kennlinie 83 handelt es sich um eine lineare Kennlinie, die mit dem erfindungsgemäßen Kupplungsaggregat realisierbar ist.

### Bezugszeichenliste

1. Kupplungsaggregat
3. Kupplung
5. Kupplungsscheibe
6. Kupplungsnabe
8. Reibbelag
9. Reibbelag
11. Druckplatte
16. Kupplungsdeckel
19. Grundkörper
20. Tellerfeder
21. Betätigungshebel
22. Betätigungshebel
23. Betätigungshebel
25. Tellerfederzunge
26. Tellerfederzunge
27. Tellerfederzunge
31. abgewinkeltes Ende
32. abgewinkeltes Ende
33. abgewinkeltes Ende
41. Rampe
44. Rolle
46. Schenkel
50. Lagerhülse
51. Wälzkörper
52. Wälzkörper
53. Wälzkörper
54. Wälzkörper
55. Käfig
56. Lagerbolzen
58. Lagerbolzen
59. Lagerhülse
61. Ende
62. Ende
66. Schenkel
67. Schenkel
69. Lagerhülse
70. Lagerbolzen
71. Ende
72. Ende
75. Schenkel
76. Schenkel
78. Verschleißnachstelleinrichtung
81. Kennlinie
82. Kennlinie
83. Kennlinie

## Patentansprüche

1. Kupplungsaggregat zur Drehmomentübertragung zwischen einer Antriebseinheit und einem Getriebe, mit mindestens einer Reibungskupplung (3), die eine Druckplatte (11) umfasst, die drehfest, aber axial begrenzt verlagerbar in einem Gehäuse (16) angeordnet ist, wobei zwischen dem Gehäuse (16), insbesondere einem Kupplungsdeckel, und der Druckplatte (11) eine Tellerfeder (20) wirksam ist, die mehrere sich im Wesentlichen radial nach innen erstreckende Tellerfederzungen (21-23) aufweist, durch welche die Druckplatte (11) in Richtung einer zwischen der Druckplatte (11) und einer Gegendruckplatte einklemmbaren Kupplungsscheibe (6) mit Reibbelägen (8,9) beaufschlagbar ist, **dadurch gekennzeichnet, dass** mehrere Tellerfederzungen (25-27) der Tellerfeder (20) abgewinkelte Enden (31-33) aufweisen, die so an dem Gehäuse (16), insbesondere an dem Kupplungsdeckel, abgestützt sind, dass die Tellerfeder (20) vorgespannt wird.

2. Kupplungsaggregat nach Anspruch 1, **dadurch gekennzeichnet**, das sich die abgewinkelten Enden (31-33) der Tellerfederzungen (25-27) im Wesentlichen in axialer Richtung erstrecken.

3. Kupplungsaggregat nach einem der vorhergehenden Ansprüche, **dadurch gekennzeichnet, dass** die abgewinkelten Enden (31-33) der Tellerfederzungen (25-27) jeweils an einer Rolle (44) abgestützt sind, die drehbar an dem Gehäuse (16), insbesondere an dem Kupplungsdeckel, gelagert ist.

4. Kupplungsaggregat nach Anspruch 3, **dadurch gekennzeichnet, dass** die Rolle (44) eine Lagerhülse (50) umfasst, die auf einem Lagerbolzen (56) drehbar gelagert ist.

5. Kupplungsaggregat nach Anspruch 4, **dadurch gekennzeichnet, dass** zwischen der Lagerhülse (50) und dem Lagerbolzen (56) Wälzkörper (51-54) angeordnet sind.

6. Kupplungsaggregat nach einem der Ansprüche 3 bis 5, **dadurch gekennzeichnet, dass** die abgewinkelten Enden (31-33) der Tellerfederzungen (25-27) jeweils eine Rampe (41) aufweisen, auf der die zugehörige Rolle (44) bei einer Betätigung der Reibungskupplung (3) abrollt.

7. Kupplungsaggregat nach Anspruch 6, **dadurch gekennzeichnet, dass** die Rampe (41) eine Rampengeometrie aufweist, durch welche die Vorspannung der Tellerfeder (20) bei einer Betätigung der Reibungskupplung (3) kleiner wird.

8. Kupplungsaggregat nach einem der vorhergehenden Ansprüche, **dadurch gekennzeichnet, dass** in Umfangsrichtung zwischen zwei sich im Wesentlichen radial nach innen erstreckenden Tellerfederzungen (21-23) jeweils eine abgewinkelte Tellerfederzunge (25-27) angeordnet ist.

9. Kupplungsaggregat nach einem der vorhergehenden Ansprüche, **dadurch gekennzeichnet, dass** die Tellerfeder (20) drei sich radial nach innen erstreckende Tellerfederzungen (21-23) und drei abgewinkelte Tellerfederzungen (25-27) aufweist.

10. Kupplungsaggregat nach einem der vorhergehenden Ansprüche, **dadurch gekennzeichnet, dass** zwischen der Tellerfeder (20) und der Druckplatte (11) eine Verschleißnachstelleinrichtung (78) wirksam ist.

## Claims

1. Clutch assembly for transmitting torque between a drive unit and a gearbox, having at least one friction clutch (3) which comprises a pressure plate (11) arranged in a housing (16) for conjoint rotation therewith but so as to be axially movable to a limited extent, wherein a plate spring (20) acts between the housing (16), in particular a clutch cover, and the pressure plate (11) and has a plurality of substantially radially inwardly extending plate spring tongues (21-23) by means of which the pressure plate (11) can be acted on in the direction of a clutch disc (6) which has friction linings (8, 9) and which can be clamped between the pressure plate (11) and a counterpressure plate, **characterized in that** a plurality of plate spring tongues (25-27) of the plate spring (20) have angled ends (31-33) which are supported on the housing (16), in particular on the clutch cover, in such a way that the plate spring (20) is preloaded.

2. Clutch assembly according to Claim 1, **characterized in that** the angled ends (31-33) of the plate spring tongues (25-27) extend substantially in the axial direction.

3. Clutch assembly according to one of the preceding claims, **characterized in that** the angled ends (31-33) of the plate spring tongues (25-27) are supported in each case on a roller (44) which is mounted in a rotatable manner on the housing (16), in particular on the clutch cover.

4. Clutch assembly according to Claim 3, **characterized in that** the roller (44) comprises a bearing sleeve (50) which is rotatably mounted on a bearing journal (56).

5. Clutch assembly according to Claim 4, **characterized in that** rolling bodies (51-54) are arranged between the bearing sleeve (50) and the bearing journal (56).

6. Clutch assembly according to one of Claims 3 to 5, **characterized in that** the angled ends (31-33) of the plate spring tongues (25-27) have in each case one ramp (41) on which the associated roller (44) rolls during an actuation of the friction clutch (3).

7. Clutch assembly according to Claim 6, **characterized in that** the ramp (41) has a ramp geometry which causes the preload of the plate spring (20) to decrease during an actuation of the friction clutch (3).

8. Clutch assembly according to one of the preceding claims, **characterized in that** in each case one angled plate spring tongue (25-27) is arranged in the circumferential direction between two substantially radially inwardly extending plate spring tongues (21-23).

9. Clutch assembly according to one of the preceding claims, **characterized in that** the plate spring (20) has three radially inwardly extending plate spring tongues (21-23) and three angled plate spring tongues (25-27).

10. Clutch assembly according to one of the preceding claims, **characterized in that** a wear adjustment device (78) acts between the plate spring (20) and the pressure plate (11).

## Revendications

1. Unité d'embrayage pour le transfert de couple entre une unité d'entraînement et une boîte de vitesse, comprenant au moins un embrayage à friction (3), qui comprend un plateau de pression (11), qui est disposé de manière solidaire en rotation mais déplaçable axialement de manière limitée dans un boîtier (16), un ressort Belleville (20) étant actif entre le boîtier (16), en particulier un couvercle d'embrayage, et le plateau de pression (11), lequel présente plusieurs langues de ressort Belleville (21-23) s'étendant essentiellement radialement vers l'intérieur, par lesquelles le plateau de pression (11) peut être sollicité avec des garnitures de friction (8, 9) dans la direction d'un disque d'embrayage (6) pouvant être serré entre le plateau de pression (11) et un plateau de pression conjugué, **caractérisée en ce que** plusieurs langues de ressort Belleville (25-27) du ressort Belleville (20) présentent des extrémités coudées (31-33) qui sont supportées sur le boîtier (16), en particulier sur le couvercle d'embrayage, de telle sorte que le ressort Belleville (20) soit précontraint.

2. Unité d'embrayage selon la revendication 1, **caractérisée en ce que** les extrémités coudées (31-33) des langues de ressort Belleville (25-27) s'étendent essentiellement dans la direction axiale.

3. Unité d'embrayage selon l'une quelconque des revendications précédentes, **caractérisée en ce que** les extrémités coudées (31-33) des langues de ressort Belleville (25-27) sont à chaque fois supportées sur un rouleau (44) qui est monté à rotation sur le boîtier (16), en particulier sur le couvercle d'embrayage.

4. Unité d'embrayage selon la revendication 3, **caractérisée en ce que** le rouleau (44) comprend une douille palier (50) qui est montée rotative sur un boulon de palier (56).

5. Unité d'embrayage selon la revendication 4, **caractérisée en ce que** des corps de roulement (51-54) sont disposés entre la douille palier (50) et le boulon de palier (56).

6. Unité d'embrayage selon l'une quelconque des revendications 3 à 5, **caractérisée en ce que** les extrémités coudées (31-33) des langues de ressort Belleville (25-27) présentent à chaque fois une rampe (41) sur laquelle roule le rouleau associé (44) dans le cas d'un actionnement de l'embrayage à friction (3).

7. Unité d'embrayage selon la revendication 6, **caractérisée en ce que** la rampe (41) présente une géométrie de rampe grâce à laquelle la précontrainte du ressort Belleville (20) est réduite dans le cas d'un actionnement de l'embrayage à friction (3).

8. Unité d'embrayage selon l'une quelconque des revendications précédentes, **caractérisée en ce qu'**à chaque fois une langue de ressort Belleville coudée (25-27) est disposée dans la direction périphérique entre deux langues de ressort Belleville (21-23) s'étendant essentiellement radialement vers l'intérieur.

9. Unité d'embrayage selon l'une quelconque des revendications précédentes, **caractérisée en ce que** le ressort Belleville (20) présente trois langues de ressort Belleville (21-23) s'étendant radialement vers l'intérieur et trois langues de ressort Belleville (25-27) coudées.

10. Unité d'embrayage selon l'une quelconque des revendications précédentes, **caractérisée en ce qu'**un dispositif de rattrapage d'usure (78) est actif entre le ressort Belleville (20) et le plateau de pression (11).
